(19) Europäisches Patentamt
European Patent Office
Office européen des brevets

(11) **EP 3 115 703 B1**

(12) **EUROPEAN PATENT SPECIFICATION**

(45) Date of publication and mention
of the grant of the patent:
**18.03.2020 Bulletin 2020/12**

(51) Int Cl.:
*F24D 19/10* *(2006.01)*    *F24F 11/00* *(2018.01)*

(21) Application number: **16166129.3**

(22) Date of filing: **20.04.2016**

(54) **CONTROL OF HEATING, VENTILATION, AIR CONDITIONING**

STEUERUNG VON HEIZUNG, LÜFTUNG, KLIMATISIERUNG

COMMANDE DE CHAUFFAGE, VENTILATION, CLIMATISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2015 EP 15175298**

(43) Date of publication of application:
**11.01.2017 Bulletin 2017/02**

(73) Proprietor: **Siemens Schweiz AG**
**8047 Zürich (CH)**

(72) Inventors:
• **Petry, Karl-Heinz**
 **8808 Pfäffikon (CH)**
• **Vogt, Andreas**
 **6005 Luzern (CH)**

(74) Representative: **Maier, Daniel Oliver**
**Siemens AG**
**Postfach 22 16 34**
**80506 München (DE)**

(56) References cited:
**EP-A2- 1 936 288        DE-A1-102012 023 848**
**DE-U1-202012 012 915**

**Description**

Background

The present disclosure relates to a control device for heating, ventilation, air-conditioning installations. More particularly, the present disclosure focuses on a control device capable of hydronic balancing. The instant disclosure also relates to heating, ventilation, air-conditioning installations with a control device as disclosed hereinafter.

Installations for heating, ventilation and / or air-conditioning (HVAC) are commonly made up of a plurality of circuits. Each circuit comprises one or several terminal units to provide heating and / or cooling to various parts of a building. Terminal units generally are heating devices or cooling devices. A terminal unit of a domestic heating system can, for instance, be a radiator.

In HVAC installations, numerous factors such as pipe cross-sections, valve characteristics, positions of terminal units within the distribution network etc affect the flow through the circuits. These factors yield hydraulic resistances that vary throughout the system. Hydraulic resistances generally relate pressure drop and flow of a heating medium or flow of a coolant.

HVAC installations, in particular heating systems, require hydronic balancing. Hydronic balancing overcomes issues due to different hydraulic resistances of the circuits of a HVAC installation. Hydronic balancing of heating installations of commercial, residential and / or industrial sites ensures that each circuit of a system experiences adequate flow.

The actual arrangement of a distribution network can often no longer be established in existing or in historic buildings.

Estimates then have to be used of the hydraulic resistances of the various parts of a HVAC installation. In addition, estimates have to be used of the amount of heating required to maintain comfort in each room. Due to those uncertainties, hydronic balancing will be difficult to achieve in existing and / or in historic buildings.

The aforementioned practical difficulties may lead to conservative estimates of the amount of heating required to maintain comfort. Those conservative estimates commonly involve radiators with values of supply temperatures that are excessive. Consequently, the thermal losses of boilers in the installation are unnecessarily high.

In the absence of proper hydronic balancing, parts of a building will be oversupplied or will be undersupplied with heat. That is, the HVAC system will not be able to supply the heating or the cooling required. The HVAC system will thus operate inefficiently. Also, parts of a building will experience excessive flow.

Excessive flow generally involves noisy valves and / or noisy radiators. In addition, excessive flow increases wear of mechanical parts such as electromechanical valves, membrane valves and / or pumps. As for electric pumps, excessive flow further implies waste of electric energy.

The present disclosure improves on control devices for HVAC installations. The instant disclosure aims at providing hydronic balancing without prior knowledge of the hydraulic resistance of each individual circuit of an installation.

The German utility model DE202012012915U1 was filed on 24 September 2012. DE202012012915U1 teaches a heating- and/or cooling apparatus with a central heat unit.

Summary

The present disclosure provides a control device which carries out hydronic balancing without (exact) knowledge of the details of a distribution network. A control device as per this disclosure is particularly useful in conjunction with installations in existing or in historic buildings. A control device as per this disclosure is typically part of a heating, ventilation, air-conditioning installation.

The control device of the instant disclosure is able to communicate with (at least two of) the valves of a HVAC installation. These valves are operable to communicate, by way of non-limiting example, effective room temperature (and / or valve positions) to the control device. The control device is operable to communicate a target position to the valves of an installation and to adjust flow through a pump of the system. To achieve hydronic balancing, the control device in a first step determines and records the maximum positions for each valve. The control device also determines the time constants of temperature rise and / or of temperature drop for (at least two of) the rooms of an installation. The control device in a second steps adjusts, in particular lowers, flow through the pump of the system. The control device continues to adjust flow through the pump of the HVAC installation until the position of a valve approaches or substantially approaches 100%.

The above problems are resolved by a control device and by a method according to the main claims of this disclosure. Preferred embodiments of the present disclosure are covered by the dependent claims.

In other words, the present disclosure teaches a method for control of a HVAC installation with a heat source and with at least two heat exchangers connected to a pump operable to generate a pressure resulting in a fluid flowing through said heat exchangers, wherein the heat exchangers each comprise an adjustable, electromechanical valve each associated with a temperature sensor, and wherein each of the valves is operable to modulate flow through its heat exchanger between an open position giving flow of a fluid through the heat exchanger and a closed position giving no flow, wherein the valves and the pump connect to a controller such that the controller is configured to adjust and to monitor the positions of each of the valves and is configured to adjust the pressure generated by the pump, the method comprising the steps of adjusting each of the electromechanical valves to a position different from its closed position, each of the valves taking a first measurement and after the first measurement taking a second measurement, preferably a second temperature measurement, determining for each of the valves a temperature rise quantity as a function of the results of the first measurement and of the second measurement, determining and recording a limit position for each valve as a function of at least one of said temperature rise quantities, adjusting each of the electromechanical valves to its limit position, lifting the limits for the positions of each of the valves to an upper limit position, lowering said pressure generated by the pump while monitoring valve positions for each valve by the controller until one of the valves approaches or substantially approaches its upper limit position.

It is envisaged that the heat source can be positive or negative. That is, the heat source may be used for heating as well as for cooling purposes.

The present disclosure also teaches a controller for a HVAC installation with a heat source and with at least two heat exchangers connected to a pump operable to generate a pressure resulting in a fluid flowing through said heat exchangers, wherein the heat exchangers each comprise an adjustable, electromechanical valve each associated with a temperature sensor, and wherein each of the valves is operable to modulate flow through its heat exchanger between an open position giving flow of a fluid through the heat exchanger and a closed position giving no flow, wherein the controller is configured to connect to the valves and to the pump and is configured to adjust and to monitor the positions of each of the valves and is configured to adjust the pressure generated by the pump, wherein the controller is configured to adjust each of the electromechanical valves to a position different from its closed position, wherein the controller is configured to read from each of the valves the result of a first measurement and the result of a second measurement taken after the first measurement, preferably after the first temperature measurement, wherein the controller is configured to determine for each of the valves a temperature rise quantity as a function of the results of said first measurement and of said second measurement, wherein the controller is configured to determine and to record for each of the valves a limit position as a function of at least one of said temperature rise quantities, wherein the controller is configured to adjust each of the electromechanical valves to its limit position, wherein the controller is configured to lift the limits for the positions of each of the valves to an upper limit position, wherein the controller is configured to lower said pressure generated by the pump while monitoring valve positions for each valve until one of the valves approaches or substantially approaches its upper limit position.

It is an object of the present disclosure to provide a control device that changes valve positions in accordance with configuration changes of the system. These configuration changes include, but are not limited to, additional heat sources due to incident solar radiation and / or people present in a room. The control device is thus able to iteratively adjust flow through the pump of the system.

It is also object of the present disclosure to provide a control device that is low-cost, durable and reliable. It is envisaged that a faulted (proportional, integral and / or derivative) controller of a valve no longer entails failure of the system as a whole. A central control device preferably has built-in proportional, integral and / or derivative control for at least one valve.

It is another object of the present disclosure to provide a control device wherein the control devices determines quantities related to temperature rise and / or temperature drop for a room from at least two subsequent measurements of temperature.

It is yet another object of the present disclosure to provide a control device that determines quantities related to temperature rise and / or temperature drop for a room from at least two subsequent measurements of valve position and / or valve stroke.

It is still an object of the present disclosure to provide a control device wherein the control device reads a valve position of a HVAC installation and / or communicates with at least one flow meter of a HVAC installation.

The present disclosure further provides a heating and / or ventilation, and / or air-conditioning installation with a control device according to the instant disclosure.

In other words, the present disclosure teaches a HVAC installation with a controller according to the instant disclosure.

The present disclosure also teaches a HVAC installation with a controller according to any the instant disclosure providing at least one fuel cell and / or at least one cogeneration plant as a heat source.

The present disclosure further provides a building with a heating and / or ventilation, and / or air-conditioning installation with a controller according to the instant disclosure.

In other words, the present disclosure teaches a commercial and / or residential and / or industrial building with a controller according to the instant disclosure.

Brief description of the drawings

Various features will become apparent to those skilled in the art from the following detailed description of the disclosed non-limiting embodiments. The drawing that accompanies the detailed description can be briefly described as follows:

FIG 1 is a schematic drawing of a prior art HVAC installation.

Fig 2 details the hydraulic characteristics of the installation of Fig 1.

Fig 3 is a schematic drawing of a HVAC installation with a control unit.

Detailed description

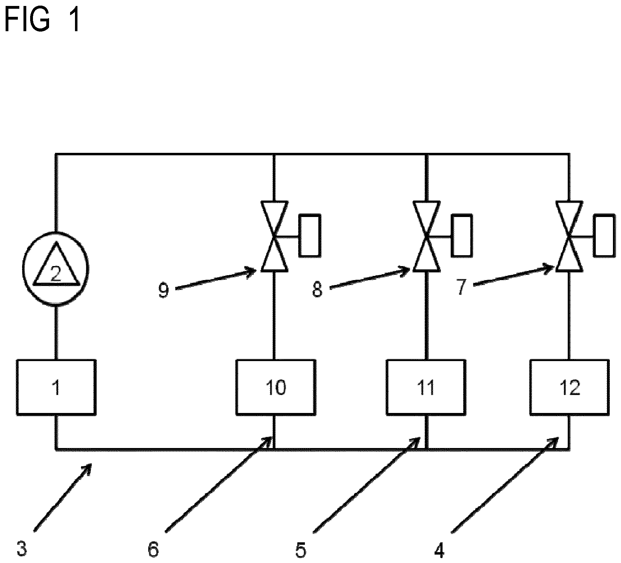

The control device of the present disclosure is typically part of a heating, ventilation and / or air-conditioning installation. A HVAC installation as shown on Fig 1 comprises a heat source 1 such as a heat pump, a gas-fired burner, an oil-fired burner, a cogeneration plant, a (polymer electrolyte membrane) fuel cell, a silicone oxide fuel cell etc. A pump 2 circulates a suitable medium, such as a heating medium or a refrigerant, through the closed loop circuit 3. The medium may, by way of non-limiting example, be water, a R-401A, R-404A, R-406A, R-407A, R-407C, R-408A, R-409A, R-410A, R-438A, R-500, or R-502 blend. The pump 2 preferably is an electric pump. It is envisaged that the pump 2 is a variable speed pump. In a particular embodiment, a pulse-width modulation unit feeds the winding(s) of a motor of the pump 2 in accordance with a duty cycle.

In other words, the instant disclosure teaches a controller 15 configured to adjust the pressure generated by the pump 2 by feeding a motor of the pump 2 with a pulse-width modulated signal.

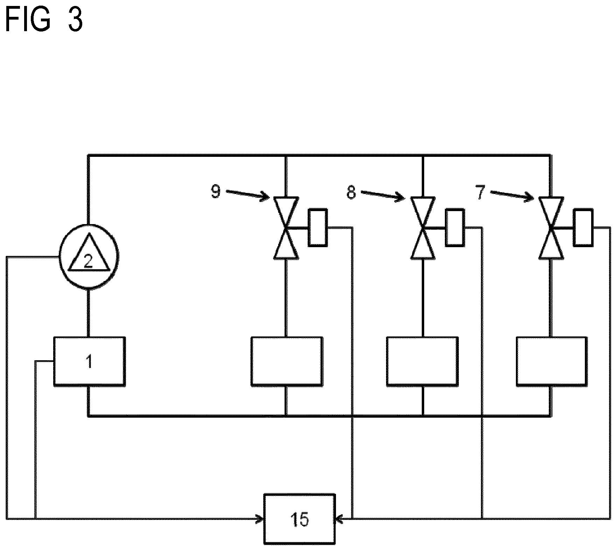

The closed loop circuit 3 of Fig 3 is made up of a plurality of loops 4, 5, and 6. A valve 7, 8, and 9 is arranged in each loop 4, 5, and 6. The valves 7, 8, and 9 are used to adjust flow through their respective loops 4, 5, and 6. At least one of the valves 7, 8, and 9 is a electromechanical valve. It is envisaged that all of the valves 7, 8, and 9 are electromechanical valves. Each of the loops 4, 5, and 6 shown on Fig 1 has a valve 7, 8, and 9. In a special embodiment, there is at least one loop with no valve. In another embodiment, at least one loop 4, 5, or 6 comprises a plurality of valves. At least one of the valves 7, 8, or 9 of the installation preferably measures temperature and / or adjusts flow in accordance with temperature.

In other words, the controller 15 of the instant disclosure is configured to connect to the valves 7, 8, 9, and is configured to read from each of the valves 7, 8, 9 the result of a first measurement and the result of a second measurement taken after the first temperature measurement, wherein the first measurement is a first temperature measurement and the second measurement is a second temperature measurement.

The loops 4, 5, 6 also each provide a heat exchange unit 10, 11, 12. If the HVAC system of Fig 1 is a heating installation, the heat exchange unit 10, 11, 12 will, for instance, be a radiator. Each heat exchange unit 10, 11, 12 may also comprise a plurality of heat exchangers such as a plurality of radiators.

It is envisaged that each loop 4, 5, and 6 supplies a part of a building with heat or with cooling. In a particular embodiment, these parts are rooms of a building. The building may, for instance, be a commercial, industrial and / or residential site. The building may, in particular, be an existing and / or a historic site.

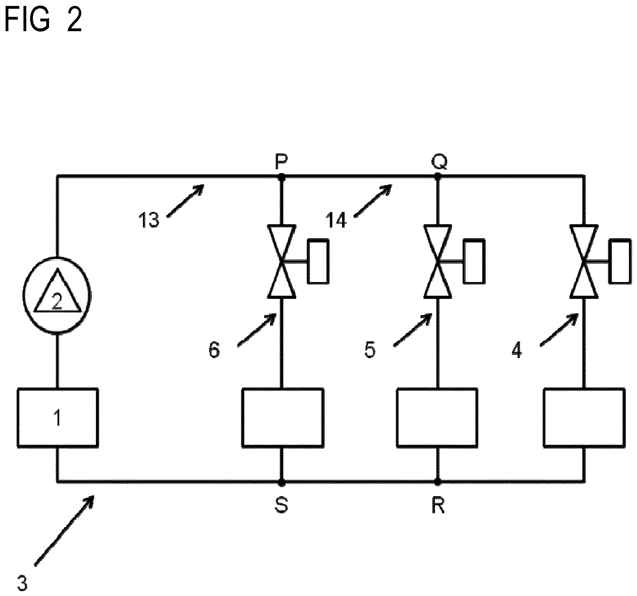

Each of the loops 4, 5, 6 shown on Fig 2 has a hydraulic resistance. Let $b_4$ be the hydraulic resistance of loop 4, $b_5$ the hydraulic resistance of loop 5, and $b_6$ the hydraulic resistance of loop 6. Due to symmetry of the distribution network, the hydraulic resistances of the branches P -> Q and R -> S can be combined into a single resistance $b_{14}$. Likewise, a resistance value $b_{13}$ describes the contributions of all the branches and loops to the left of points P and Q.

Fig 2 shows three loops in total. The first loop 4 comprises the branches and the loops with resistances $b_{13}$, $b_{14}$, and $b_4$. The second loop 5 comprises the branches and the loops with resistances $b_{13}$, $b_{14}$, and $b_5$. The third loop 6 comprises the branches and the loops with resistances $b_{13}$ and $b_6$.

Let $\dot{V}_4$ be the flow through loop 4, $\dot{V}_5$ be the flow through loop 5, and $\dot{V}_6$ be the flow through loop 6. The branch with resistance $b_{13}$ then experiences a flow $\dot{V}_{13}$ which is the sum of all flow values = $\dot{V}_4$, $\dot{V}_5$, and $\dot{V}_6$ through the loops 4, 5, and 6:

$$\dot{V}_{13} = \dot{V}_4 + \dot{V}_5 + \dot{V}_6$$

The flow $\dot{V}_{13}$ through the branch with resistance $b_{13}$ yields a pressure drop $\Delta p_{13}$ which can commonly be approximated as follows:

$$\Delta p_{13} = b_{13} \cdot \dot{V}_{13}^2$$

The values $\Delta p_4$, $\Delta p_5$, $\Delta p_6$ of pressure drop in loops 4, 5 and 6 are analogously approximated as:

$$\Delta p_4 = b_4 \cdot \dot{V}_4^2$$

$$\Delta p_5 = b_5 \cdot \dot{V}_5^2$$

$$\Delta p_6 = b_6 \cdot \dot{V}_6^2$$

The overall drop of pressure $\Sigma \Delta p_{L4}$ through loop 4 then reads:

$$\sum \Delta p_{L4} = \Delta p_{13} + \Delta p_{14} + \Delta p_4$$

The overall drop of pressure $\Sigma \Delta p_{L5}$ through loop 5 reads:

$$\sum \Delta p_{L5} = \Delta p_{13} + \Delta p_{14} + \Delta p_5$$

Likewise the overall drop of pressure $\Sigma \Delta p_{L6}$ through loop 6 reads:

$$\sum \Delta p_{L6} = \Delta p_{13} + \Delta p_6$$

The below example assumes hydraulic resistances $b_{13}$ and $b_{14}$ of 0.4 Pa/(l/h)$^2$. Also, the hydraulic resistances $b_4$, $b_5$, and $b_6$ of loops 4, 5, and 6 are all 1.2 Pa/(l/h)$^2$. The flow values $\dot{V}_4$ = 150 1/h, $\dot{V}_5$ = 150 1/h, and $\dot{V}_6$ = 229 1/h through loops 4, 5, and 6 yield a flow

$$\dot{V}_{13} = \dot{V}_4 + \dot{V}_5 + \dot{V}_6 = 529 \ 1/h.$$

Analogously, the flow $\dot{V}_{14}$ through the branch with resistance $b_{14}$ is

$$\dot{V}_{14} = \dot{V}_4 + \dot{V}_5 = 300 \ 1/h.$$

The pressure drop $\Delta p_{13}$ is

$$\Delta p_{13} = b_{13} \cdot \dot{V}_{13}^2 = 111936 \ Pa.$$

and the pressure drop $\Delta p_{14}$ is

$$\Delta p_{14} = b_{14} \cdot \dot{V}_{14}^2 = 36000 \ Pa.$$

The pressure drops $\Delta p_4$, $\Delta p_5$, and $\Delta p_6$ in loops 4, 5, and 6 are

$$\Delta p_4 = b_4 \cdot \dot{V}_4^2 = 27000 \ Pa,$$

$$\Delta p_5 \;=\; b_5 \cdot \dot{V}_5^2 \;=\; 27000 \;\; Pa,$$

and

$$\Delta p_6 \;=\; b_6 \cdot \dot{V}_6^2 \;=\; 62929 \;\; Pa.$$

The values $\Sigma\Delta p_{L4}$, $\Sigma\Delta p_{L5}$, and $\Sigma\Delta p_{L6}$ for the overall drop of pressure within loops 4, 5, and 6 thus read

$$\sum \Delta p_{L4} = \Delta p_{13} + \Delta p_{14} + \Delta p_4 = 174936 \, Pa$$

$$\sum \Delta p_{L5} = \Delta p_{13} + \Delta p_{14} + \Delta p_5 = 174936 \, Pa$$

$$\sum \Delta p_{L6} = \Delta p_{13} + \Delta p_6 = 174936 \, Pa$$

In other words, the overall drop of pressure within loop 4 is 174936 Pa. The overall drop of pressure within loop 5 is 174936 Pa and the overall drop of pressure within loop 6 is 174936 Pa. All the values of overall pressure drop are the same.

Now assume that pump 2 of the installation generates a pressure of 200000 Pa at startup. Also, assume that all the valves 7, 8, and 9 are in their fully open positions. It follows that $\Sigma\Delta p_{L4} = \Sigma\Delta p_{L4} = \Sigma\Delta p_{L4} = 200000$ Pa.

Since the hydraulic resistances $b_{13} = b_{14} = 0.4$ Pa/(l/h)$^2$ and $b_4 = b_5 = b_6 = 1.2$ Pa/(l/h)$^2$ remain the same, the volume flows $\dot{V}_4$, $\dot{V}_5$, and $\dot{V}_6$ become

$$\dot{V}_4 = \dot{V}_5 = 160 \;\; 1/h,$$

and

$$\dot{V}_6 = 244 \;\; 1/h.$$

The ideal flow through loop 6 is the flow that maintains target temperature in the room that corresponds to loop 6. The present example assumes the ideal flow is 60 l/h for loop 6, 120 l/h for loop 5 and 100 l/h for loop 4. The actual flow through loop 6 is 244 l/h and exceeds ideal flow by more than a factor four. The room that corresponds to loop 6 will be the first room to reach (to approach) its target temperature. After system startup, the steady-state positions and / or flow values $s_4$, $s_5$, and $s_6$ for loops 4, 5, and 6 become

$s_4 = 62.5\%$ for loop 4,
$s_5 = 75\%$ for loop 5, and
$s_6 = 25\%$ for loop 6.

The installation as shown on Fig 3 adds a control unit 15 to the installation. The control unit 15 of Fig 3 is able to communicate with the pump 2 and is able to set the pressure applied by the pump 2. The control unit 15 also functions to communicate with the valves 7, 8, and / or 9 of the installation and vice versa. That is, the valves 7, 8, 9 communicate their steady-state positions and / or flow values $s_4$, $s_5$, and $s_6$ to the (central) control unit 15. The steady-state positions and / or flow values $s_4$, $s_5$, and $s_6$ correspond to valve positions (strokes) such as fully open or fully closed.

The system then enters into a control mode in which the control unit 15 lowers the pressure delivered by the pump 2. It is envisaged that the control unit 15 iteratively lowers the pressure applied by the pump in steps such as 2%, 3%, 5%, or 10%. After each step, the control unit 15 records the positions and / or flow values of the valves 7, 8, and / or 9. After a number of iterations, the pressure applied by the pump reaches (approaches) 115000 Pa. The corresponding steady-state position and / or flow value $s_5$ for loop 5 then becomes $s_5 = 99\%$.

Likewise, the steady-state values for the loops 4 and 6 become

$s_4$ = 83% and
$s_6$ = 76%.

The steady-state position and / or flow value $s_5$ is close to 100%. A steady-state value of 99% is actually within 5% of 100%. The control unit 15 thus stops iterating.

The room and / or the part of the building that corresponds to loop 6 will be the first to reach (approach) target temperature. As the first room and / or part of the building reaches (approaches) its target temperature, the system will change from startup mode into control mode. It is envisaged that the control unit 15 estimates the duration of the startup phase. To that end, the control unit 15 relies on a mathematical model of temperature rise and / or temperature drop. According to the invention, the mathematical model assumes a temperature rise function r(t) as a function of time t that reads

$$r(t) = T_0\big(1 - e^{-t/\tau}\big).$$

$T_0$ denotes the target temperature and $\tau$ denotes the time constant of temperature rise. The temperature rise at time t = 0 according to this model is

$$r'(0) = \frac{T_0}{\tau}.$$

The control unit 15 thus determines the time constant $\tau$ of temperature rise by obtaining at least two subsequent measurements of temperature in relation to valve position and / or flow. It is envisaged that the valves 7, 8, and 9 of the installation communicate temperatures at the beginning t ≈ 0 of the startup phase to the control unit 15. It is also envisaged that the valves 7, 8, and 9 communicate the result of a second temperature measurement a few seconds or minutes later. In a special embodiment, the second temperature measurement is carried out after 30 seconds, preferable after 1 minute or after 2 minutes, also envisaged after 3 minutes, after 5 minutes, after 7 minutes or after 10 minutes.

In other words, the controller 15 of the instant disclosure is configured to determine for each of the valves 7, 8, 9 a temperature rise quantity as a function of the results of said first measurement and of said second measurement wherein the temperature rise quantity is a function of the difference between the first measurement and the second measurement.

The skilled person readily understands that temperature rises may be positive and / or negative. A negative temperature rise corresponds to a drop in temperature. The skilled person modifies the above formulas accordingly.

In other words, the controller 15 of the instant disclosure is configured to determine for each of the valves 7, 8, 9 a temperature rise quantity as a function of the results of said first measurement and of said second measurement wherein the temperature rise quantity is a function of the difference between the first measurement and the second measurement and wherein the temperature rise quantity is a time constant $\tau$.

It is envisaged that the control unit 15 provides control functionality for the valves 7, 8, and / or 9. That is, the control unit 15 provides proportional, integral and / or derivative (PID) control for the valves 7, 8, and / or 9. To that end, the valves 7, 8, and / or 9 send temperature measurements and / or valve positions to the control unit 15. The control unit 15 derives a control signal from the temperature measurements and provides the control signal to the valves 7, 8, and / or 9 of the installation. Integration of control functionality into the control unit 15 yields a system that is less prone to failure. The system will, in particular, no longer fail as a whole due to a valve with a faulted PI(D) controller. Integration of control functionality into the control unit 15 also offers advantages in terms of cost, since the installation dispenses with separate controllers in each valve.

In other words, the controller (15) of the instant disclosure teaches is configured to adjust the position of at least one valve 7, 8, 9 in accordance with a control output derived and / or determined and / or calculated by the controller 15 using proportional and / or integral and / or derivative control.

A wide range of communication busses and protocols exist that provides communication functions in between valves and control units. Typically, wireless solutions such as WLAN, KNX® RF, and/or Enocean® are employed. Hard-wired solutions are also on the market. These frequently rely on Ethernet® cables or on KNX® cables. The choice of any particular wireless or hard-wired solution is also influenced by bandwidth requirements.

It is envisaged that the valves 7, 8, and / or 9 may communicate with the control unit 15 using various protocols. There are cases where the devices of an installation rely on a single protocol such as KNX®, Modbus, LON or BACnet®. In addition, a number of proprietary protocols exist.

The control unit 15 comes with a memory and with a memory controller to record values such as time constants, proportional, integral, derivative parameters for control etc. The valves 7, 8, and / or 9 preferably also comprise a memory and a memory controller. The memory may, by way of non-limiting example, be random access memory (RAM), flash memory, registers, a hard disk, a removable disk, or similar.

It is envisaged that the control device 15 and / or the valves run an operating system. The operating system may, for instance, be an Android® operating system, a Windows® operating system, or a Linux® operating system such as Meego®. The operating system may be a system specifically tailored to embedded systems and / or to controllers of HVAC installations. The operating system may also be general-purpose.

Parts of the control device 15 or parts of a method according to the present disclosure may be embodied in hardware, in a software module executed by a processor, or by a cloud computer, or by a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), magnetic RAM, read only memory (ROM), flash memory, EPROM memory, EEPROM memory, registers, a hard disk, a removable disk, other optical disks, a millipede® device, or any available media that can be accessed by a computer or any other IT equipment or appliance.

It should be understood that the foregoing relates only to certain embodiments of the invention and that numerous changes may be made therein without departing the scope of the invention as defined by the following claims. It should also be understood that the invention is not restricted to the illustrated embodiments and that various modifications can be made within the scope of the following claims.

Reference numerals

| | |
|---|---|
| 1 | heat source |
| 2 | (electric) pump |
| 3 | circuit |
| 4, 5, 6 | loops |
| 7, 8, 9 | (electromechanical) valves |
| 10, 11, 12 | heat exchangers or groups of heat exchangers |
| 13, 14 | branches |
| 15 | (central) control unit |

**Claims**

1. A method for control of a HVAC installation with a heat source (1) and with at least two heat exchangers (10, 11, 12) connected to a pump (2) operable to generate a pressure resulting in a fluid flowing through said heat exchangers (10, 11, 12),
   wherein the heat exchangers (10, 11, 12) each comprise an adjustable, electromechanical valve (7, 8, 9) each associated with a temperature sensor, and
   wherein each of the valves (7, 8, 9) is operable to modulate flow through its heat exchanger (10, 11, 12) between an open position giving flow of a fluid through the heat exchanger (10, 11, 12) and a closed position giving no flow, wherein the valves (7, 8, 9) and the pump (2) connect to a controller (15) such that the controller (15) is configured to adjust and to monitor the positions of each of the valves (7, 8, 9) and is configured to adjust the pressure generated by the pump (2),
   the method comprising the steps of:

   adjusting each of the electromechanical valves (7, 8, 9) to a position different from its closed position,
   each of the valves (7, 8, 9) taking a first temperature measurement and after the first temperature measurement taking a second temperature measurement,
   determining for each of the valves (7, 8, 9) a temperature rise quantity as a function of the results of the first temperature measurement and of the second temperature measurement,
   determining and recording a limit position for each valve (7, 8, 9) as a function of at least one of said temperature rise quantities,
   adjusting each of the electromechanical valves (7, 8, 9) to its limit position,
   lifting the limits for the positions of each of the valves (7, 8, 9) to an upper limit position,
   lowering said pressure generated by the pump (2) while monitoring valve positions for each valve (7, 8, 9) by the controller (15) until one of the valves (7, 8, 9) approaches or substantially approaches its upper limit position,

**characterized in that**

the temperature rise quantity is determined by using a mathematical model assuming a temperature rise function $r(t) = T_0(1-e^{-t/\tau})$ as a function of time t, wherein $T_0$ denotes a target temperature and $\tau$ denotes a time constant of temperature rise, wherein the time constant $\tau$ of temperature rise is determined by obtaining at least the first temperature measurement and the second temperature measurement in relation to valve position and/or flow.

2. A controller (15) for a HVAC installation with a heat source (1) and with at least two heat exchangers (10, 11, 12) connected to a pump (2) operable to generate a pressure resulting in a fluid flowing through said heat exchangers (10, 11, 12),

   wherein the heat exchangers (10, 11, 12) each comprise an adjustable, electromechanical valve (7, 8, 9) each associated with a temperature sensor, and

   wherein each of the valves (7, 8, 9) is operable to modulate flow through its heat exchanger (10, 11, 12) between an open position giving flow of a fluid through the heat exchanger (10, 11, 12) and a closed position giving no flow,

   wherein the controller (15) is configured to connect to the valves (7, 8, 9) and to the pump (2) and is configured to adjust and to monitor the positions of each of the valves (7, 8, 9) and is configured to adjust the pressure generated by the pump (2),

   wherein the controller (15) is configured to adjust each of the electromechanical valves (7, 8, 9) to a position different from its closed position,

   wherein the controller (15) is configured to read from each of the valves (7, 8, 9) the result of a first temperature measurement and the result of a second temperature measurement taken after the first temperature measurement,

   wherein the controller (15) is configured to determine for each of the valves (7, 8, 9) a temperature rise quantity as a function of the results of said first temperature measurement and of said second temperature measurement,

   wherein the controller (15) is configured to determine and to record for each of the valves (7, 8, 9) a limit position as a function of at least one of said temperature rise quantities,

   wherein the controller (15) is configured to adjust each of the electromechanical valves (7, 8, 9) to its limit position,

   wherein the controller (15) is configured to lift the limits for the positions of each of the valves (7, 8, 9) to an upper limit position,

   wherein the controller (15) is configured to lower said pressure generated by the pump (2) while monitoring valve positions for each valve (7, 8, 9) until one of the valves (7, 8, 9) approaches or substantially approaches its upper limit position,

   **characterized in that**

   the controller (15) is configured for determining the temperature rise quantity by using a mathematical model assuming a temperature rise function $r(t) = T_0(1-e^{-t/\tau})$ as a function of time t, wherein $T_0$ denotes a target temperature and $\tau$ denotes a time constant of temperature rise,

   wherein the controller (15) is further configured for determining the time constant $\tau$ of temperature rise by obtaining at least the first temperature measurement and the second temperature measurement in relation to valve position and/or flow.

3. The controller (15) according to claim 2, wherein the controller (15) is configured to determine a limit position by obtaining a reading from each of the valves after a time span that depends on at least one of said temperature rise quantities.

4. The controller (15) according to claim 3, wherein at least one of the obtained readings is a valve position and / or a valve stroke and / or a flow rate of a fluid.

5. The controller (15) according to claim 2, wherein the controller (15) is configured to map a temperature rise quantity to a limit position for at least one of the valves (7, 8, 9) .

6. The controller (15) according to any of the claims 2 to 5, wherein the controller (15) is configured to adjust the position of the at least one valve (7, 8, 9) in accordance with a control output derived by the controller (15) using proportional and integral control.

7. The controller (15) according to any of the claims 2 to 5, wherein the controller (15) is configured to adjust the position of the at least one valve (7, 8, 9) in accordance with a control output derived by the controller (15) using proportional and integral and derivative control.

8. The controller (15) according to any of the claims 2 to 7, wherein the controller (15) is configured to lift the limits for the positions of each of the valves (7, 8, 9) to their fully open positions.

9. The controller (15) according to any of the claims 2 to 8, wherein the controller (15) is configured to adjust the pressure generated by the pump (2) by feeding a motor of the pump (2) with a pulse-width modulated signal.

10. A HVAC installation with a controller (15) according to any of the claims 2 to 9.

11. A HVAC installation according to claim 10 providing at least one fuel cell and / or at least one cogeneration plant as a heat source.

## Patentansprüche

1. Verfahren zur Steuerung einer HLK-Installation mit einer Wärmequelle (1) und mindestens zwei Wärmetauschern (10, 11, 12), die mit einer Pumpe (2) verbunden sind, welche einen Druck erzeugen kann, der bewirkt, dass eine Flüssigkeit durch genannte Wärmetauscher (10, 11, 12) fließt,

   wobei die Wärmetauscher (10, 11, 12) jeweils ein verstellbares, elektromechanisches Ventil (7, 8, 9) haben, das jeweils mit einem Temperatursensor verbunden ist, und

   jedes der Ventile (7, 8, 9) den Fluss durch seinen Wärmetauscher (10, 11, 12) zwischen einer offenen Stellung, in der eine Flüssigkeit durch den Wärmetauscher (10, 11, 12) fließen kann, und einer geschlossenen Stellung, in der kein Durchfluss möglich ist, modulieren kann,

   wobei die Ventile (7, 8, 9) und die Pumpe (2) mit einer Steuereinheit (15) verbunden sind, so dass die Steuereinheit (15) dafür ausgelegt ist, die Stellungen jedes der Ventile (7, 8, 9) zu regeln und zu überwachen, und dafür ausgelegt ist, den von der Pumpe (2) erzeugten Druck zu regeln,

   wobei das Verfahren folgende Schritte umfasst:

   Regeln jedes der elektromechanischen Ventile (7, 8, 9) in eine von seiner geschlossenen Stellung abweichende Stellung,

   Vornehmen durch jedes der Ventile (7, 8, 9) einer ersten Temperaturmessung und nach der ersten Temperaturmessung einer zweiten Temperaturmessung,

   Ermitteln für jedes der Ventile (7, 8, 9) einer Temperaturanstiegsgröße als eine Funktion der Resultate der ersten Temperaturmessung und der zweiten Temperaturmessung,

   Ermitteln und Protokollieren einer Grenzstellung für jedes Ventil (7, 8, 9) als eine Funktion von mindestens einer der genannten Temperaturanstiegsgrößen,

   Regeln jedes der elektromechanischen Ventile (7, 8, 9) in seine Grenzstellung,

   Anheben der Grenzwerte für die Stellungen jedes der Ventile (7, 8, 9) zu einer oberen Grenzstellung,

   Absenken des genannten von der Pumpe (2) erzeugten Drucks, während die Ventilstellungen jedes Ventils (7, 8, 9) von der Steuereinheit (15) überwacht werden, bis sich eines der Ventile (7, 8, 9) seiner oberen Grenzstellung nähert oder im Wesentlichen nähert,

   **dadurch gekennzeichnet, dass**

   die Temperaturanstiegsgröße mit Hilfe eines mathematischen Modells ermittelt wird, bei dem eine Temperaturanstiegsfunktion $r(t) = T_0(1-e^{-t/\tau})$ als eine Funktion der Zeit t angenommen wird, wobei $T_0$ eine Soll-Temperatur bezeichnet und $\tau$ eine Zeitkonstante des Temperaturanstieges bezeichnet, wobei die Zeitkonstante $\tau$ des Temperaturanstiegs durch Erlangen mindestens der ersten Temperaturmessung und der zweiten Temperaturmessung in Bezug auf die Ventilstellung und/oder den Durchfluss ermittelt wird.

2. Steuereinheit (15) für eine HLK-Installation mit einer Wärmequelle (1) und mindestens zwei Wärmetauschern (10, 11, 12), die mit einer Pumpe (2) verbunden sind, welche einen Druck erzeugen kann, der bewirkt, dass eine Flüssigkeit durch genannte Wärmetauscher (10, 11, 12) fließt,

   wobei die Wärmetauscher (10, 11, 12) jeweils ein verstellbares, elektromechanisches Ventil (7, 8, 9) haben, das jeweils mit einem Temperatursensor verbunden ist, und

   wobei jedes der Ventile (7, 8, 9) den Fluss durch seinen Wärmetauscher (10, 11, 12) zwischen einer offenen Stellung, in der eine Flüssigkeit durch den Wärmetauscher (10, 11, 12) fließen kann, und einer geschlossenen Stellung, in der kein Durchfluss möglich ist, modulieren kann,

   wobei die Steuereinheit (15) dafür ausgelegt ist, mit den Ventilen (7, 8, 9) und der Pumpe (2) in Verbindung zu stehen, und dafür ausgelegt ist, die Stellungen jedes der Ventile (7, 8, 9) zu regeln und zu überwachen, und dafür ausgelegt ist, den von der Pumpe (2) erzeugten Druck zu regeln,

   wobei die Steuereinheit (15) dafür ausgelegt ist, jedes der elektromechanischen Ventile (7, 8, 9) in eine von seiner geschlossenen Stellung abweichende Stellung zu regeln,

wobei die Steuereinheit (15) dafür ausgelegt ist, von jedem der Ventile (7, 8, 9) das Resultat einer ersten Temperaturmessung und das Resultat einer zweiten Temperaturmessung auszulesen, die nach der ersten Temperaturmessung vorgenommen wurde,

wobei die Steuereinheit (15) dafür ausgelegt ist, für jedes der Ventile (7, 8, 9) eine Temperaturanstiegsgröße als eine Funktion der Resultate der genannten ersten Temperaturmessung und der genannten zweiten Temperaturmessung zu ermitteln,

wobei die Steuereinheit (15) dafür ausgelegt ist, eine Grenzstellung für jedes Ventil (7, 8, 9) als eine Funktion von mindestens einer der genannten Temperaturanstiegsgrößen zu ermitteln und zu protokollieren,

wobei die Steuereinheit (15) dafür ausgelegt ist, jedes der elektromechanischen Ventile (7, 8, 9) in seine Grenzstellung zu regeln,

wobei die Steuereinheit (15) dafür ausgelegt ist, die Grenzwerte für die Stellungen jedes der Ventile (7, 8, 9) zu einer oberen Grenzstellung anzuheben,

wobei die Steuereinheit (15) dafür ausgelegt ist, den genannten von der Pumpe (2) erzeugten Druck zu senken, während die Ventilstellungen jedes Ventils (7, 8, 9) überwacht werden, bis sich eines der Ventile (7, 8, 9) seiner oberen Grenzstellung nähert oder im Wesentlichen nähert,

**dadurch gekennzeichnet, dass**

die Steuereinheit (15) dafür ausgelegt ist, die Temperaturanstiegsgröße mit Hilfe eines mathematischen Modells zu ermitteln, bei dem eine Temperaturanstiegsfunktion $r(t) = T_0(1-e^{-t/\tau})$ als eine Funktion der Zeit t angenommen wird, wobei $T_0$ eine Soll-Temperatur bezeichnet und $\tau$ eine Zeitkonstante des Temperaturanstieges bezeichnet,

wobei die Steuereinheit (15) weiterhin dafür ausgelegt ist, die Zeitkonstante $\tau$ des Temperaturanstiegs durch Erlangen mindestens der ersten Temperaturmessung und der zweiten Temperaturmessung in Bezug auf die Ventilstellung und/oder den Durchfluss zu ermitteln.

3. Die Steuereinheit (15) nach Anspruch 2, wobei die Steuereinheit (15) dafür ausgelegt ist, durch Erlangen eines Messwerts von jedem der Ventile nach einer Zeitspanne, die von mindestens einer der genannten Temperaturanstiegsgrößen abhängt, eine Grenzstellung zu ermitteln.

4. Die Steuereinheit (15) nach Anspruch 3, wobei mindestens einer der erlangten Messwerte eine Ventilstellung und/oder ein Ventilhub und/oder eine Durchflussrate einer Flüssigkeit ist.

5. Die Steuereinheit (15) nach Anspruch 2, wobei die Steuereinheit (15) dafür ausgelegt ist, eine Temperaturanstiegsgröße auf eine Grenzstellung für mindestens eines der Ventile (7, 8, 9) abzubilden.

6. Die Steuereinheit (15) nach einem der Ansprüche 2 bis 5, wobei die Steuereinheit (15) dafür ausgelegt ist, die Stellung des mindestens einen Ventils (7, 8, 9) mittels proportionaler und integraler Steuerung im Einklang mit einem von der Steuereinheit (15) abgeleiteten Steuerausgang einzuregeln.

7. Die Steuereinheit (15) nach einem der Ansprüche 2 bis 5, wobei die Steuereinheit (15) dafür ausgelegt ist, die Stellung des mindestens einen Ventils (7, 8, 9) mittels proportionaler und integraler und derivativer Steuerung im Einklang mit einem von der Steuereinheit (15) abgeleiteten Steuerausgang zu regeln.

8. Die Steuereinheit (15) nach einem der Ansprüche 2 bis 7, wobei die Steuereinheit (15) dafür ausgelegt ist, die Grenzwerte für die Stellungen jedes der Ventile (7, 8, 9) zu ihren vollständig geöffneten Stellungen anzuheben.

9. Die Steuereinheit (15) nach einem der Ansprüche 2 bis 8, wobei die Steuereinheit (15) dafür ausgelegt ist, den von der Pumpe (2) erzeugten Druck zu regeln, indem ein Motor der Pumpe (2) mit einem pulsweitenmodulierten Signal gespeist wird.

10. HLK-Installation mit einer Steuereinheit (15) nach einem der Ansprüche 2 bis 9.

11. Die HLK-Installation nach Anspruch 10 mit mindestens einer Brennstoffzelle und/oder mindestens einer Heizkraftanlage als Wärmequelle.

**Revendications**

1. Procédé de commande d'une installation HVAC avec une source de chaleur (1) et avec au moins deux échangeurs de chaleur (10, 11, 12) branchés à une pompe (2) pouvant être actionnée de façon à générer une pression provoquant l'écoulement d'un fluide à travers lesdits échangeurs de chaleur (10, 11, 12),

dans lequel les échangeurs de chaleur (10, 11, 12) comprennent chacun une vanne électromécanique ajustable (7, 8, 9), chacune d'elles étant associée à un capteur de température, et

dans lequel chacune des vannes (7, 8, 9) peut être actionnée afin de moduler l'écoulement à travers son échangeur de chaleur (10, 11, 12) entre une position ouverte permettant l'écoulement d'un fluide à travers l'échangeur de chaleur (10, 11, 12) et une position fermée ne permettant aucun écoulement,

dans lequel les vannes (7, 8, 9) et la pompe (2) sont reliées à un système de commande (15), de sorte que le système de commande (15) soit configuré afin d'ajuster et de contrôler les positions de chacune des vannes (7, 8, 9) et soit configuré afin d'ajuster la pression générée par la pompe (2),

le procédé comprenant les étapes consistant à :

ajuster chacune des vannes électromécaniques (7, 8, 9) dans une position différente de sa position fermée, chacune des vannes (7, 8, 9) prenant une première mesure de température et après la première mesure de température, prenant une seconde mesure de température,

déterminer pour chacune des vannes (7, 8, 9) une quantité d'augmentation de température en fonction des résultats de la première mesure de température et de la seconde mesure de température,

déterminer et enregistrer une position limite pour chaque vanne (7, 8, 9) en fonction d'au moins une desdites quantités d'augmentation de température,

ajuster chacune des vannes électromécaniques (7, 8, 9) en sa position limite,

augmenter les limites pour les positions de chacune des vannes (7, 8, 9) vers une position limite supérieure, abaisser ladite pression générée par la pompe (2) tout en contrôlant les positions de la vanne pour chaque vanne (7, 8, 9) par le système de commande (15) jusqu'à ce qu'une des vannes (7, 8, 9) approche ou approche sensiblement de sa position limite supérieure,

**caractérisé en ce que**

la quantité d'augmentation de température est déterminée en utilisant un modèle mathématique supposant une fonction d'augmentation de la température $r(t) = T_0(1 - e^{-t/\tau})$ en fonction du temps t, dans laquelle $T_0$ représente une température cible et $\tau$ représente une constante dans le temps d'augmentation de la température, dans lequel la constante de temps $\tau$ d'augmentation de température est déterminée par l'obtention d'au moins la première mesure de température et de la seconde mesure de température relativement à la position de la vanne et/ou à l'écoulement.

2. Système de commande (15) pour une installation HVAC avec une source de chaleur (1) et avec au moins deux échangeurs de chaleur (10, 11, 12) reliés à une pompe (2) pouvant être actionnée de façon à générer une pression provoquant l'écoulement d'un fluide à travers lesdits échangeurs de chaleur (10, 11, 12),

dans lequel les échangeurs de chaleur (10, 11, 12) comprennent chacun une vanne ajustable, électromécanique (7, 8, 9) chacune étant associée à un capteur de température, et

dans lequel chacune des vannes (7, 8, 9) peut être actionnée afin de moduler l'écoulement à travers son échangeur de chaleur (10, 11, 12) entre une position ouverte permettant l'écoulement d'un fluide à travers l'échangeur de chaleur (10, 11, 12) et une position fermée ne permettant aucun écoulement,

dans lequel le système de commande (15) est configuré afin de se connecter aux vannes (7, 8, 9) et à la pompe (2) et est configuré afin d'ajuster et de contrôler les positions de chacune des vannes (7, 8, 9) et est configuré afin d'ajuster la pression générée par la pompe (2),

dans lequel le système de commande (15) est configuré afin d'ajuster chacune des vannes électromécaniques (7, 8, 9) dans une position différente de sa position fermée,

dans lequel le système de commande (15) est configuré afin de lire sur chacune des vannes (7, 8, 9) le résultat d'une première mesure de température et le résultat d'une seconde mesure de température prise après la première mesure de température,

dans lequel le système de commande (15) est configuré afin de déterminer pour chacune des vannes (7, 8, 9) une quantité d'augmentation de température en fonction des résultats de ladite première mesure de température et de ladite seconde mesure de température,

dans lequel le système de commande (15) est configuré afin de déterminer et d'enregistrer, pour chacune des vannes (7, 8, 9), une position limite en fonction d'au moins une desdites quantités d'augmentation de température,

dans lequel le système de commande (15) est configuré afin d'ajuster chacune des vannes électromécaniques (7, 8, 9) dans sa position limite,

dans lequel le système de commande (15) est configuré afin d'augmenter les limites pour les positions de chacune des vannes (7, 8, 9) vers une position limite supérieure,

dans lequel le système de commande (15) est configuré afin d'abaisser ladite pression générée par la pompe (2) tout en contrôlant les positions de la vanne pour chaque vanne (7, 8, 9) jusqu'à ce que l'une des vannes (7, 8, 9) approche ou approche sensiblement de sa position limite supérieure,
**caractérisé en ce que**
le système de commande (15) est configuré afin de déterminer la quantité d'augmentation de température en utilisant un modèle mathématique en supposant une fonction d'augmentation de la température r(t)= $T_0$ (1 - $e^{-t/\tau}$) en fonction du temps t, où $T_0$ représente une température cible et $\tau$ représente une constante de temps d'augmentation de température,
dans lequel le système de commande (15) est en outre configuré afin de déterminer la constante de temps $\tau$ d'augmentation de la température en obtenant au moins la première mesure de température et la seconde mesure de température relativement à la position de la vanne et/ou à l'écoulement.

3. Le système de commande (15) selon la revendication 2, dans lequel le système de commande (15) est configuré afin de déterminer une position limite en obtenant un relevé de chacune des vannes après un laps de temps qui dépend d'au moins une desdites quantités d'augmentation de température.

4. Le système de commande (15) selon la revendication 3, dans lequel au moins un des relevés obtenus est une position de la vanne et/ou une course de la vanne et/ou un débit d'un fluide.

5. Le système de commande (15) selon la revendication 2, dans lequel le système de commande (15) est configuré afin de cartographier une quantité d'augmentation de température en une position limite pour au moins une des vannes (7, 8, 9).

6. Le système de commande (15) selon l'une quelconque des revendications 2 à 5, dans lequel le système de commande (15) est configuré afin d'ajuster la position de la au moins une vanne (7, 8, 9) conformément à un résultat de commande obtenu du système de commande (15) en utilisant une commande proportionnelle et intégrale.

7. Le système de commande (15) selon l'une quelconque des revendications 2 à 5, dans lequel le système de commande (15) est configuré afin d'ajuster la position de la au moins une vanne (7, 8, 9) conformément à un résultat de commande obtenu du système de commande (15) en utilisant une commande proportionnelle et intégrale et dérivative.

8. Le système de commande (15) selon l'une quelconque des revendications 2 à 7, dans lequel le système de commande (15) est configuré afin d'augmenter les limites pour les positions de chacune des vannes (7, 8, 9) dans leurs positions totalement ouvertes.

9. Le système de commande (15) selon l'une quelconque des revendications 2 à 8, dans lequel le système de commande (15) est configuré afin d'ajuster la pression générée par la pompe (2) en alimentant un moteur de la pompe (2) avec un signal modulé par largeur d'impulsion.

10. Installation HVAC avec un système de commande (15) selon l'une quelconque des revendications 2 à 9.

11. L'installation HVAC selon la revendication 10 prévoyant au moins une cellule de combustible et/ou au moins une installation de cogénération comme source de chaleur.

# FIG 1

FIG 2

FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202012012915 U1